# EUROPEAN PATENT APPLICATION

(11) **EP 4 693 207 A1**
(43) Date of publication of application: **11.02.2026**
(21) Application number: 24778687.4
(22) Date of filing: 05.02.2024
(51) Int. Cl.: G06T 19/00, G06Q 50/10, H04L 67/131

(54) **INFORMATION PROCESSING DEVICE, INFORMATION PROCESSING METHOD, AND PROGRAM**

(30) Priority: 31.03.2023 JP 2023057949
(71) Applicant: Sony Group Corporation, Tokyo 108-0075 (JP)
(72) Inventor: YOSHIMURA, Shunji, Tokyo 108-0075 (JP)
(74) Representative: MFG Patentanwälte Meyer-Wildhagen Meggle-Freund Gerhard PartG mbB
(86) International application number: PCT/JP2024/003771
(87) International publication number: WO 2024/202542

(57) **Abstract**

Provided is an information processing device including a condition acquisition unit that acquires an output condition related to output of content in a virtual space, a determination unit that determines whether or not at least one element of multiple elements constituting the content output in the virtual space meets the output condition, in reference to information related to the output condition, and a selection unit that selects, in a case of determination that at least one element of the multiple elements does not meet the output condition, an alternative element to be used instead of the element not meeting the output condition from alternative element candidates.

## Description

### [Technical Field]

The present disclosure relates to an information processing device, an information processing method, and a program.

### [Background Art]

In recent years, technologies for outputting content according to selection by users have been gradually spreading. For example, there has been known such a technology which outputs avatars as content according to selection of elements constituting the avatars by users.

Moreover, there has been developed such a technology which limits such a type of content in accordance with restrictions such as a license. For example, PTL 1 discloses a technology which determines whether or not devices have a license related to content and allows the devices to generate the content only in a case where the devices have been licensed.

### [Citation List]

### [Patent Literature]

[PTL 1]
PCT Patent Publication No. WO2018/150707

### [Summary]

### [Technical Problem]

However, the technology described in PTL 1 limits output of all elements constituting content in a case where content is not permitted to be generated. In this case, experiential values receivable by users may decrease.

Accordingly, the present disclosure proposes a novel and improved technology capable of providing alternative content of desired content.

### [Solution to Problem]

Provided according to the present disclosure is an information processing device including a condition acquisition unit that acquires an output condition related to output of content in a virtual space, a determination unit that determines whether or not at least one element of multiple elements constituting the content output in the virtual space meets the output condition, in reference to information related to the output condition, and a selection unit that selects, in a case of determination that at least one element of the multiple elements does not meet the output condition, an alternative element to be used instead of the element not meeting the output condition from alternative element candidates.

Further provided according to the present disclosure is an information processing method executed by a computer, the method including acquiring an output condition related to output of content in a virtual space, determining whether or not at least one element of multiple elements constituting the content output in the virtual space meets the output condition, in reference to information related to the output condition, and selecting, in a case of determination that at least one element of the multiple elements does not meet the output condition, an alternative element to be used instead of the element not meeting the output condition from alternative element candidates.

Further provided according to the present disclosure is a program causing a computer to function as a condition acquisition unit that acquires an output condition related to output of content in a virtual space, a determination unit that determines whether or not at least one element of multiple elements constituting the content output in the virtual space meets the output condition, in reference to information related to the output condition, and a selection unit that selects, in a case of determination that at least one of the multiple elements does not meet the output condition, an alternative element to be used instead of the element not meeting the output condition from alternative element candidates.

### [Brief Description of Drawings]

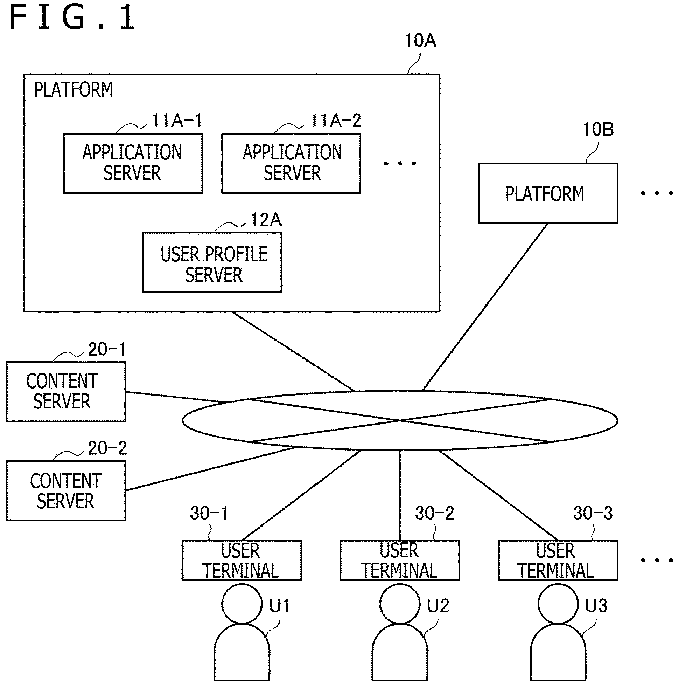

[FIG. 1] FIG. 1 is a diagram for explaining an outline of an information processing system according to a first embodiment of the present disclosure.
[FIG. 2]

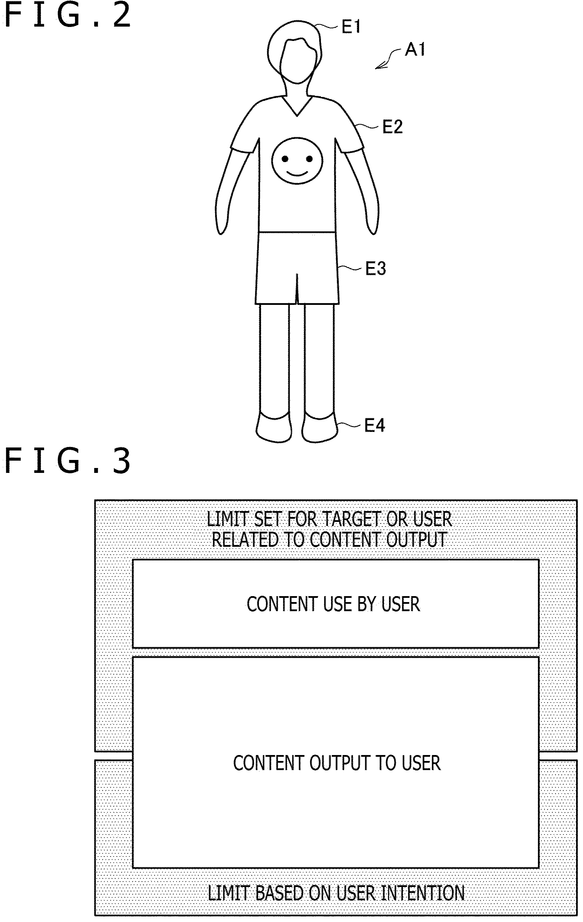

   FIG. 2 is a diagram for explaining content elements constituting an avatar as an example of content.
[FIG. 3]
   FIG. 3 is a diagram for explaining a limit on content use by a using user U and a limit on content output to an output user U.
[FIG. 4]

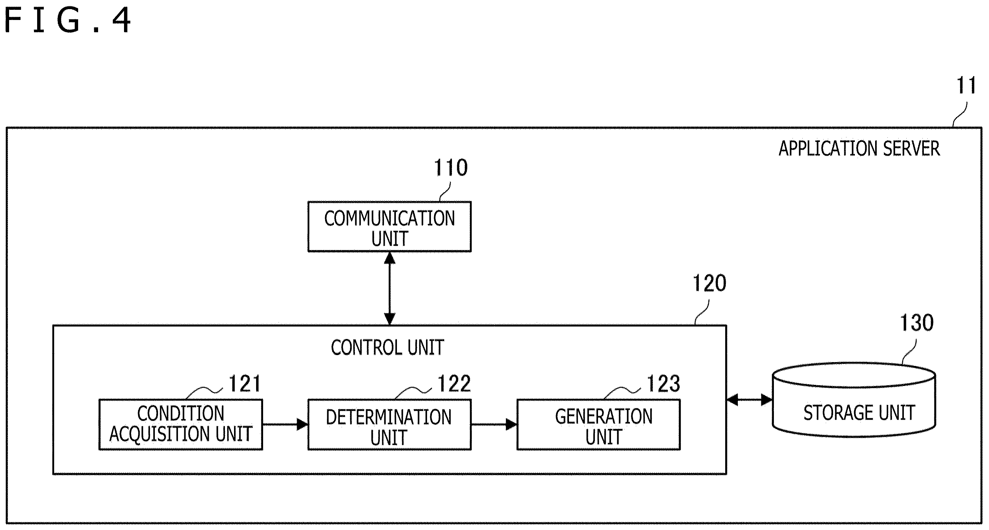

   FIG. 4 is a block diagram illustrating an example of a configuration of an application server 11 according to the present embodiment.
[FIG. 5]

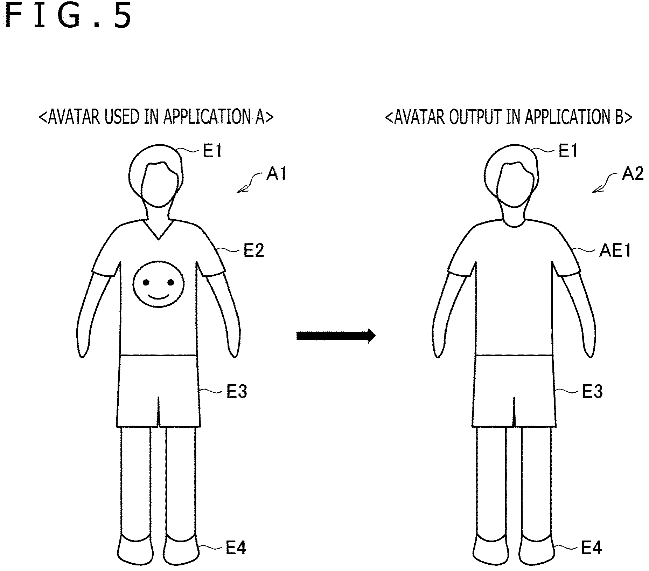

   FIG. 5 is a diagram for explaining alternative content generated by a generation unit 123 in a case where the using user U designates a request for use of the content in a different application.
[FIG. 6]

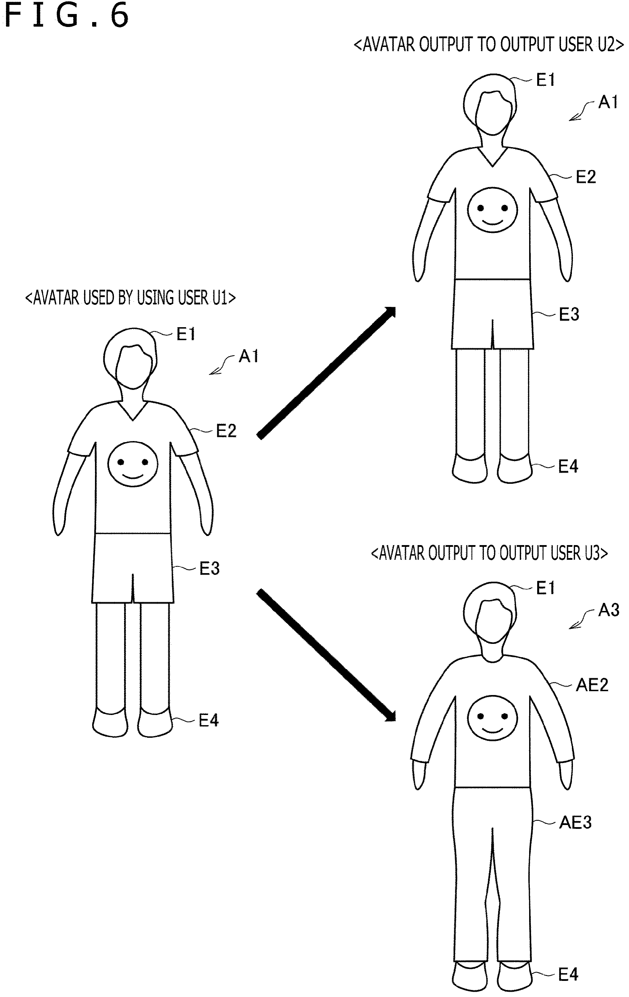

   FIG. 6 is a diagram for explaining alternative content generated according to a result of determination related to an output condition applied to the output user U.
[FIG. 7]

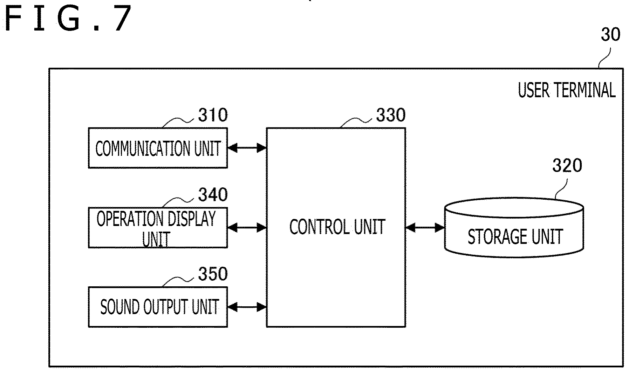

   FIG. 7 is a block diagram illustrating an example of a configuration of a user terminal 30 according to the present embodiment.
[FIG. 8]

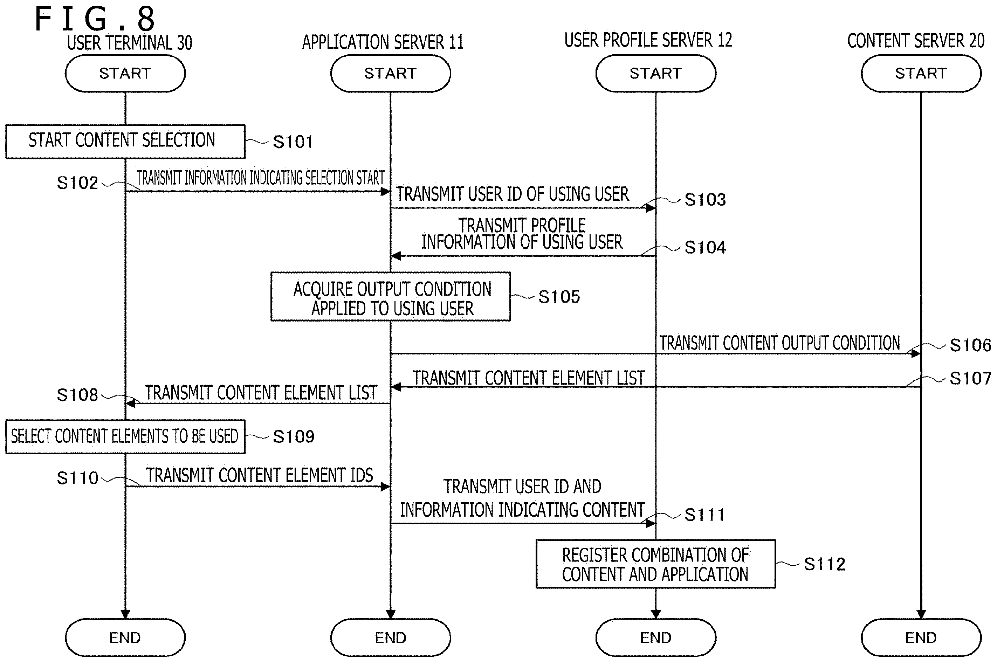

   FIG. 8 is a sequence diagram illustrating an example of a flow of a process related to content use by the using user U and performed by the information processing system according to the present embodiment.
[FIG. 9]

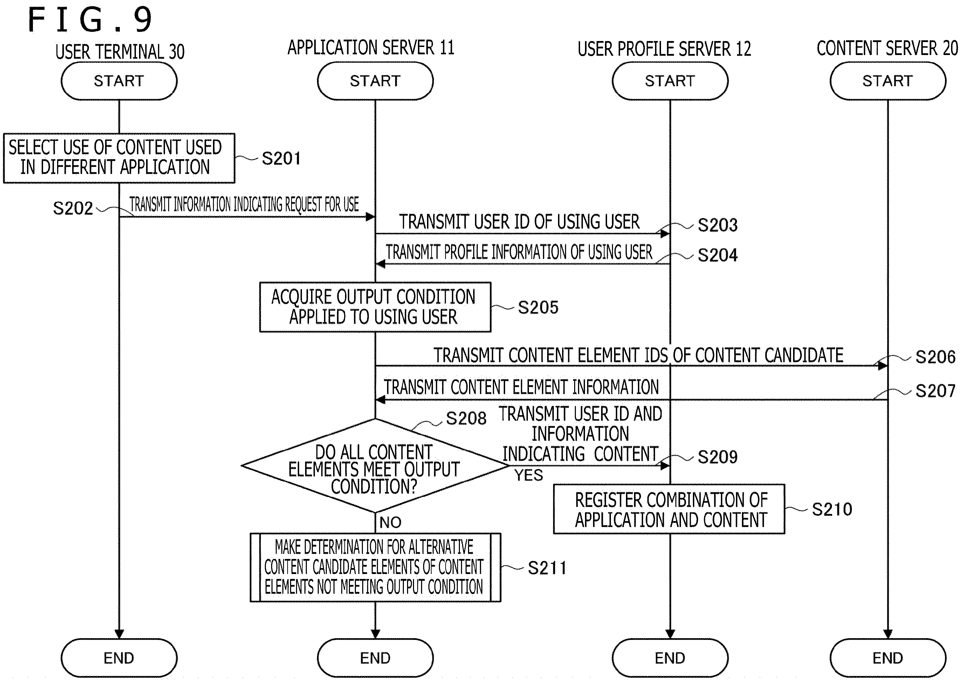

   FIG. 9 is a sequence diagram illustrating an example of a flow of a process related to content use by the using user U and performed by the information processing system according to the present embodiment.
[FIG. 10]

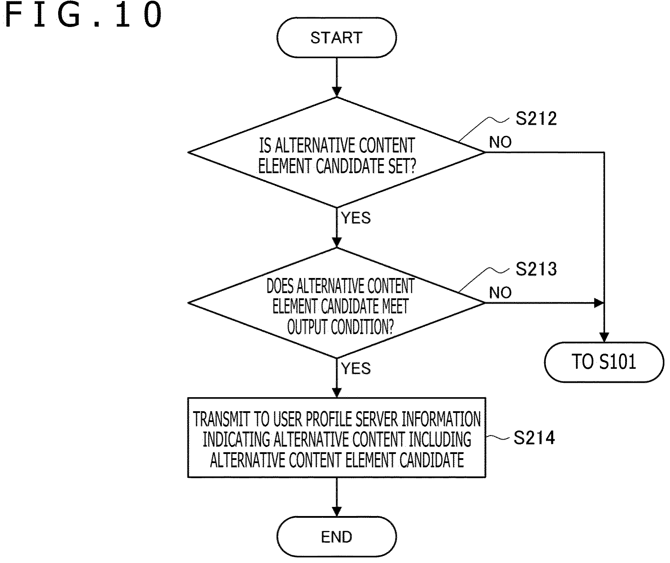

   FIG. 10 is a flowchart illustrating an example of a flow of a determination process performed by a determination unit 122 and related to an alternative content candidate element.
[FIG. 11]

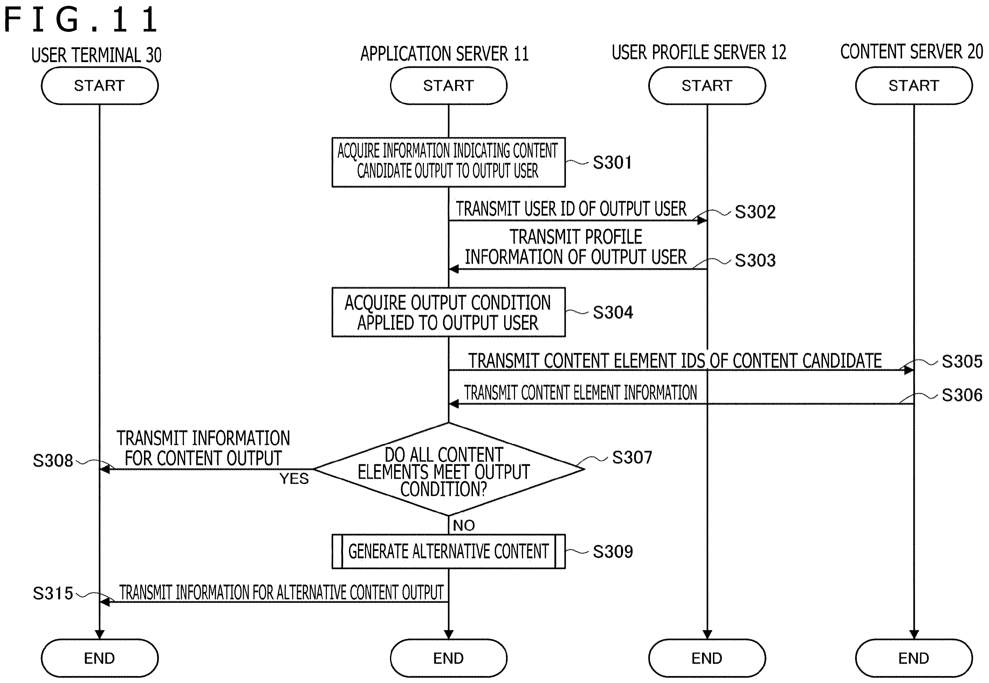

   FIG. 11 is a sequence diagram illustrating an example of a flow of a process related to content output to the output user U and performed by the information processing system according to the present embodiment.
[FIG. 12]

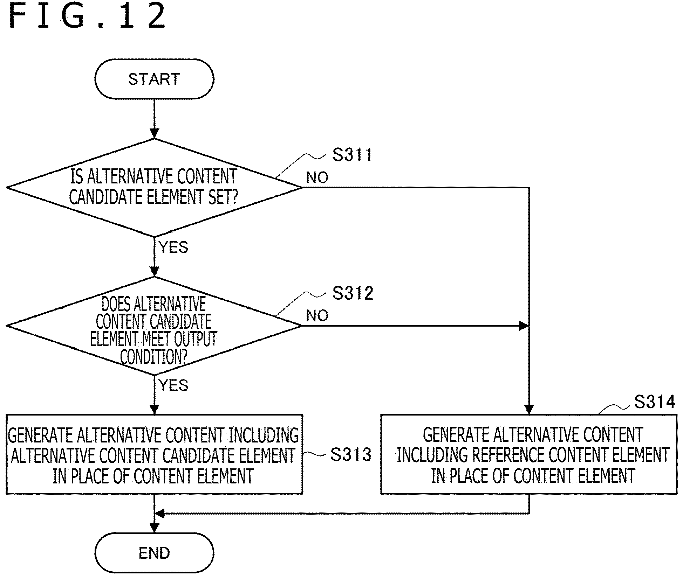

   FIG. 12 is a flowchart illustrating an example of a flow of an alternative content generation process performed by the generation unit 123.
[FIG. 13]

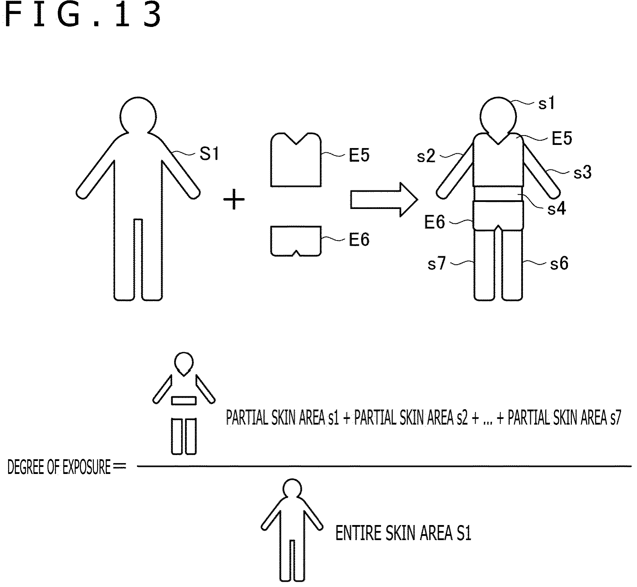

   FIG. 13 is a diagram for explaining determination made by the determination unit 122 with regard to an output condition for a degree of exposure to be exhibited by an avatar.
[FIG. 14]

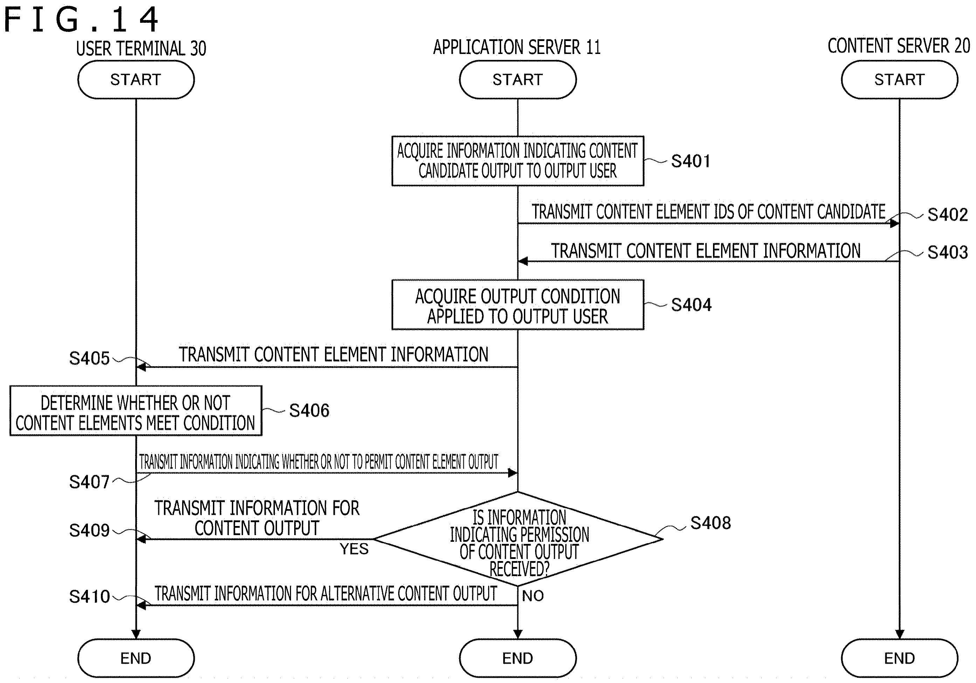

   FIG. 14 is a sequence diagram illustrating an example of a flow of a process performed by an information processing system according to a second modification of the present embodiment.
[FIG. 15]

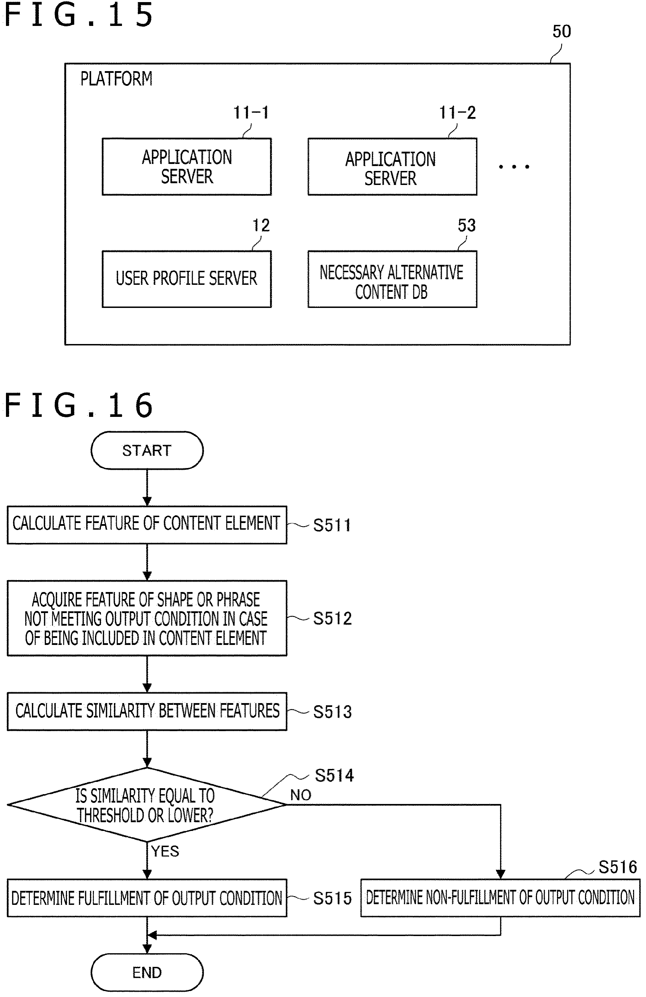

   FIG. 15 is a block diagram illustrating an example of a configuration of a platform 50 according to a second embodiment.
[FIG. 16]
   FIG. 16 is a sequence diagram illustrating an example of a flow of a process performed by the application server 11 in an information processing system according to the second embodiment of the present disclosure.
[FIG. 17]

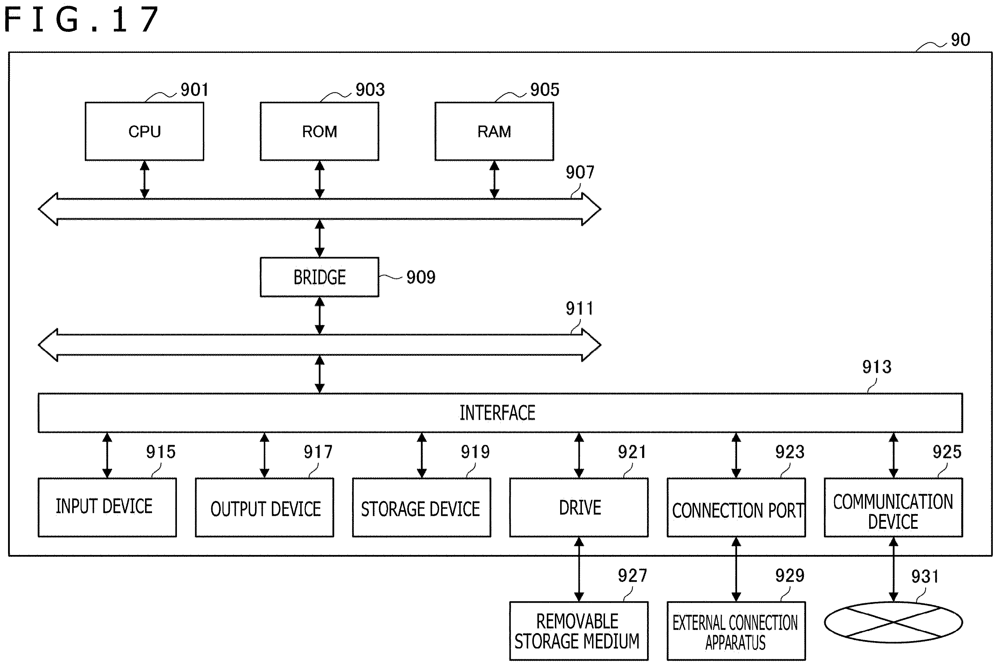

   FIG. 17 is a block diagram illustrating a hardware configuration example of an information processing device 90 which implements the application server 11, a user profile server 12, a content server 20, the user terminal 30, and a necessary alternative content DB 53 according to the embodiments of the present disclosure.

### [Description of Embodiments]

Preferred embodiments of the present disclosure will hereinafter be described in detail with reference to the accompanying drawings. Note that constituent elements having substantially identical functional configurations in the present description and the drawings will be given identical reference signs to omit repetitive explanation.

In addition, the description will be presented in the following order.
1. Outline of information processing system of first embodiment of present disclosure
2. Functional configuration example of present embodiment
3. Operational processing example of present embodiment
4. Examples of operational advantages of present embodiment
5. Modifications of present embodiment
6. Second embodiment
7. Hardware configuration
8. Appendix

### <<1. Outline of information processing system of first embodiment of present disclosure>>

An outline of an information processing system according to a first embodiment of the present disclosure will first be described with reference to FIG. 1. FIG. 1 is a diagram illustrating the outline of the information processing system according to the first embodiment of the present disclosure. As illustrated in FIG. 1, the information processing system according to the present embodiment includes multiple platforms 10, multiple content servers 20, multiple user terminals 30, and a network 40. As illustrated in FIG. 1, the platforms 10, the content servers 20, and the user terminals 30 are configured to communicate with each other via the network 40.

### (Platform 10)

Each of the platforms 10 provides services including content output to users. The multiple platforms 10 individually provide different services. While the information processing system of the present embodiment in the example illustrated in FIG. 1 includes two platforms of a platform 10A and a platform 10B, the number of the platforms 10 is not limited to this number and may be one or any number larger than one. As illustrated in FIG. 1, each of the platforms 10 includes application servers 11 and a user profile server 12. Each of the platforms 10 may administrate virtual space services provided by the application servers 11.

### (Application server 11)

Each of the application servers 11 is an example of an information processing device which communicates with the user terminals 30 each having started an application, to provide services for users U in the respective applications. Each of the application servers 11 outputs content to the users U via the user terminals 30 to provide services.

The multiple application servers 11 individually provide different services in accordance with settings input by respective administrators of the application servers 11. Note that, while the platform 10A in the example illustrated in FIG. 1 includes two application servers of an application server 11A-1 and an application server 11A-2, the number of the application servers is not limited to this number and may be one or any number larger than one.

Each of the application servers 11 provides a virtual space, such as a metaverse constituting a three-dimensional virtual space, as a service. For example, each of the application servers 11 may output a virtual object (2D object or 3D object) as content, such as an avatar acting as a double of each of the users U in a virtual space and a building or a structure disposed in a virtual space. Moreover, each of the application servers 11 may output sounds, videos, images, sentences, or the like as content to a virtual space. Furthermore, the virtual space service provided by each of the application servers 11 may provide either one virtual space or multiple virtual spaces.

Content output from each of the application servers 11 includes multiple elements. Each of the multiple elements constituting content will also be referred to as a content element. Information related to content elements is stored in the content servers 20 described later. The application servers 11 receive from the content servers 20 information for output of content elements (this information will be referred to as content output information). The application servers 11 generate content based on multiple content elements, and output the generated content to the user terminals 30. Content elements will be more detailed later.

### (User profile server 12)

Each of the user profile servers 12 is a server which stores profile information of the respective users U using services provided by the platform 10. For example, profile information may include such information as user IDs for identifying the respective users U, user names used in the platform, genders, dates of birth, and regions of residence. Moreover, profile information may include information related to content used by the users U. Information related to content used by the users will be detailed later.

### (Content server 20)

Each of the content servers 20 is an example of an administrating device which retains information related to content elements constituting content output to the users U. Each of the content servers 20 retains multiple pieces of content output information and a content element database which stores content element information (an example of element information) related to each of multiple content elements.

For example, content including content elements stored in the content servers 20 may be virtual objects, sounds, videos, images, sentences, or the like. Described here will be details of content elements that constitute each content and that are retained in the content servers 20 in the form of information.

For example, a virtual object as one example of content may be an avatar, a building, or the like. For example, an avatar may include content elements related to bodily elements, such as a hairstyle, a hair color, a skin color, a facial part, and a body shape. Moreover, an avatar may include content elements related to items, such as clothing including clothes, shoes, a hat, an accessory, or the like, and belongings including a bag, a penlight, a fan, or the like. Furthermore, a building as a virtual object may include content elements such as windows, walls, and floors.

FIG. 2 is an explanatory diagram for explaining content elements constituting an avatar as an example of content. In the example illustrated in FIG. 2, an avatar A1 includes content elements E1 through E4. The content elements E1 through E4 are virtual objects of a hairstyle, an article of clothing (top), an article of clothing (bottom), and shoes, respectively.

Note that content may represent an entire virtual space containing multiple virtual objects. In this case, the entire virtual space may include the multiple virtual objects as content elements.

In addition, sounds as one example of content include multiple sounds as content elements. Note that sounds may represent music, voices, or a combination of music and voices. Music may constitute a melody, while voices may constitute a talk such as a rakugo (comic story). For example, each of content elements constituting sounds as content may be a sound contained in a measure or a phrase forming a melody as music.

Moreover, videos as one example of content include multiple videos as content elements. Note that videos constituting content may be videos combined with sounds. In this case, videos combined with sounds may include content elements of sounds and content elements of videos or may include content elements each of which is a combination of multiple sounds and videos. For example, each of content elements constituting videos as content may be a division of a video divided into any time units of the video or a division of a video divided into chapters of the video.

Further, images as one example of content include multiple images as content elements. For example, each of content elements constituting images as content may be a division of an image divided into any pixel units of the image or a division of an image divided according to positions of objects contained in the image.

Besides, sentences as one example of content include multiple sentences as content elements. For example, each of content elements constituting sentences as content may be a division of a sentence divided by any number of characters or paragraphs or a division of a sentence divided into chapters of the sentence.

While objects, sounds, videos, images, and sentences have been described above as examples of types of content output from the application servers 11, the types of content are not limited to these types. For example, content may include multiple types of content. Note that, in a case where content includes multiple types of content, the content may retain each of the multiple types of content included in this content, as a content element. For example, in a case where content includes an object and a video, the content may retain each of these object and video as a content element of this content.

Moreover, in a case where content includes multiple types of content, the content may retain each of content elements constituting each of the multiple types of content included in this content, as a content element.

The description will return to content element information contained in a content element database. For example, content element information includes such information as content element IDs and content element names for identifying respective content elements. Moreover, content element information may include information related to types of content elements. For example, the types of content elements may include objects, sounds, videos, images, or sentences. In addition, the types of content elements may be further classified into finer types, such as locations of objects in an avatar (hairstyle, clothing, item, etc.)

Further, content element information may include detailed information of content elements. For example, detailed information of content elements may include size information of content elements, information indicating file sizes and roles of content elements in an application, and other information. Size information is information indicating a size in a corresponding unit for each of content elements. For example, in a case where a content element constitutes an object, size information may be information indicating a spatial size of this object in a virtual space. In addition, in a case where a content element constitutes a sound or a video, size information may be information indicating a reproduction time of this sound or video.

Detailed information of content elements may further include information indicating content which can be generated by content elements. For example, in a case where a content element constitutes a sound which can form a melody as music, detailed information may include information indicating this melody (melody name, etc.), information indicating the reproduction position of this content element in the order of reproduction of multiple content elements constituting the melody, and other information.

In addition, content element information includes limit information indicating an output limit on content elements. For example, limit information may be information indicating permitted ages, permitted regions, permitted platforms, or permitted applications for receiving content elements. Permitted platforms correspond to the platforms 10 licensed to use content elements. Meanwhile, permitted applications are applications provided by the application servers 11 licensed to use content elements. Each of permitted regions, permitted platforms, and permitted applications may be indicated by an ID for identifying the corresponding region, the platform 10, and the application server 11.

Note that limit information is not limited to the examples described above. For example, limit information may be information indicating that content elements contain violent, sexual, or political implications. Moreover, limit information may be information indicating that details of content elements are preferably limited for believers in specific religions.

Content element information may further include such information as addresses indicating destinations where content output information related to content elements are stored in the content servers 20.

In addition, content element information includes information indicating alternative candidate content elements (an example of alternative element candidates) which are alternative candidates for content elements designated as limited content elements. These alternative candidate content elements are content elements provided as alternative candidates for content elements not permitted to be output. Alternative candidate content elements for content elements may be content elements different from these content elements and stored in the content server 20 or may be content elements stored in an external server or the like.

Alternative candidate content elements corresponding to respective content elements are set in advance by an administrator of the content server 20. It is preferable that alternative candidate content elements be content elements of the same content type as the content type of corresponding content elements. However, the content type of alternative candidate content elements may be different from the content type of content elements. For example, alternative candidate content elements may be images for content elements constituting videos.

It is further preferable that alternative candidate content elements be content elements each having a size equal or similar to the size of the corresponding content element. The similar size here refers to a size of alternative candidate content elements for which the users U would not have a feeling of strangeness even after content elements are replaced with the alternative candidate content elements. However, alternative candidate content elements are not required to have a size equal or similar to the size of the content elements corresponding to the alternative candidate content elements if resizing to the size of the content elements is allowed.

For example, in a case of content elements constituting objects, alternative candidate content elements may be content elements having a spatial size equal or similar to the size of the corresponding content elements in a virtual space, or content elements resizable to the size of the corresponding content elements. In addition, in a case of content elements constituting music or videos, alternative candidate content elements may be content elements having a reproduction time equal or similar to the reproduction time of the corresponding content elements, or content elements allowed to be elongated/reduced, cut, or padded according to the reproduction time of the corresponding content elements.

In a case where alternative candidate content elements are stored in the content servers 20, information indicating alternative candidate content elements may be content element IDs of the alternative candidate content elements. In addition, in a case where alternative candidate content elements are stored in external servers, information indicating alternative candidate content elements may be URL or the like representing destinations in the external servers.

Note that multiple alternative candidate content elements may be set for each of corresponding content elements. Particularly, in a case where content elements are assumed to be limited for multiple reasons, it is preferable that multiple alternative candidate content elements be set for each of the content elements so as to handle each of the multiple reasons.

Each of the content servers 20 transmits content output information and content element information that is included in the content element database to the application servers 11 according to information received from the application servers 11.

While the information processing system of the present embodiment in the example illustrated in FIG. 1 includes two content servers of content servers 20-1 and 20-2, the number of the content servers 20 is not limited to this number and may be one or any number larger than one.

### (User terminal 30)

The user terminals 30 are information terminals used by the users U and are provided as an example of information processing devices. Note that each of the user terminals 30 may include multiple information processing terminals or only a single information processing terminal. For example, each of the user terminals 30 may include a single device selected from various types of devices such as a PC (Personal Computer), a tablet terminal, a smartphone, an HMD (Head Mounted Display), a game console, a television set, a wearable device, a motion capture device, and a microphone, or a combination of these types of devices.

Each of the users U operates the user terminal 30 to designate content desired to be used in an application. Each of the users U uses the content in the application to present the content to different users U or share the content with different users U. For example, each of the users U uses an avatar to present the avatar as his/her double to different users U.

More specifically, each of the users U may select content elements constituting content, to designate content desired to be used. Moreover, each of the users U may select content including multiple content elements, to designate content desired to be used. Further, each of the users U may designate a request for use of content in a different application.

Use of content by each of the users U is limited according to a result of determination made by the application server 11 with regard to an output condition in some cases. Accordingly, content designated by one of the users U is considered as a candidate for content to be output to the different user U. Note that content used by one of the users U is not necessarily required to be output to the different user U, and may be output to only the same user U. In this case, the content designated by one of the users U is considered as a candidate for content to be output to the same user U. In addition, content used by one of the users U may be output to both the same user U and the different user U.

Each of the user terminals 30 transmits to the application server 11 information related to a candidate for content selected and used by the user U. For example, information related to a candidate for content may be a content element ID of a content element constituting the candidate for this content. Moreover, information related to a candidate for content may be information for identifying content corresponding to the candidate for the content, such as a melody name and a video name (or an ID or the like for identifying the melody or the video). Further, information related to a candidate for content may be information indicating an application ID for identifying a different application and a content type.

Moreover, each of the user terminals 30 receives information for output of content from the application server 11. For example, each of the user terminals 30 receives from the application server 11 information for output of content corresponding to content used by the user U different from the user U using the same user terminal 30. Each of the user terminals 30 outputs content to the user U according to this information for output of the content. In a case where content contains objects, videos, images, or sentences, the content is displayed on a display unit included in each of the user terminals 30, to output the content to the user U. Meanwhile, in a case where content contains sounds, sounds are output from a sound output unit, such as a speaker, included in each of the user terminals 30, to output the content to the user U.

Each of the users U can be either a user using content or a user viewing and listening to content corresponding to the content used by the different user U, according to situations. These types of users will be distinguished from each other in the present description for convenience of explanation. For distinguishing these types of users in the present description, the user U using content will be referred to as a "using user U," and the user U using the user terminal 30 which receives output of content corresponding to the content used by the using user U will be referred to as an "output user U."

The manner of output of content corresponding to content used by the using user U to the user terminal 30 used by the output user U is determined by each of the application servers 11 according to determination on an output condition. Note that content to be output will also be referred to as output content.

For example, output content may be content used by the using user U. Moreover, output content may be alternative content which includes different content elements in place of some or all of multiple content elements constituting content used by the using user U.

As described above, content use by the using user U and content output to the output user U are limited by determination made by each of the application servers 11 with regard to an output condition.

For example, content output may be limited according to whether or not a license corresponding to permission by a designer, a right holder, or the like of content elements is granted.

Moreover, content output may be limited according to conditions related to religions. For example, in a case of content constituting an avatar and including a content element of clothing which has a high degree of exposure, it is estimated that inclusion of this clothing as the content element constituting the avatar is limited for specific religions. Further, in a case of content which has content elements each including patterns, shapes, contents, lyrics, and the like having religious implications, it is estimated that output of the content including these content elements is limited.

In addition, content output may be limited according to conditions related to politics. For example, in a case of content which has content elements each including patterns, shapes, contents, lyrics, and the like having political implications, it is estimated that output of the content including these content elements is limited.

Besides, content output may be limited according to conditions related to ages. For example, in a case of content constituting an avatar and having a content element of clothing which has a high degree of exposure or having a content element of belongings evoking violence such as weapons and knives, it is estimated that output of the content including these content elements is limited according to ages. Moreover, in a case of content which has content elements each including patterns and shapes having violent or sexual implications or including violent or sexual contents, lyrics, and the like, it is estimated that output of the content including these content elements is limited.

Content output may be limited for both content use by the using user U and content output to the output user U. Limits imposed on content use by the using user U and content output to the output user U will be explained here with reference to FIG. 3. FIG. 3 is an explanatory diagram for explaining limits imposed on content use by the using user U and content output to the output user U.

As illustrated in FIG. 3, it is assumed that content use by the using user U and content output to the output user U are limited under various output conditions. For example, these output conditions include output conditions based on rules of the platforms 10 and applications, output conditions related to content use set for each of the using users U, output conditions related to content display set for each of the output users U, and output conditions based on intentions of the output users U.

An output condition related to content use by the using user U will first be discussed. Content use by the using user U may be limited based on an output condition set for targets related to content output or for the using user U. For example, the targets related to content output include the platforms 10 or the application servers 11.

For example, the output condition for the targets related to content output is such a condition that a license of content elements is granted for the platforms 10 or the application servers 11. Moreover, a different example of the output condition set for each of the targets related to content output is a condition concerning whether or not content elements meet a condition set by the administrators of the platforms 10 or the application servers 11 based on rules of the platforms 10 or the applications. For example, the condition set by the administrators of the platforms 10 or the application servers 11 may include such a condition that content elements are providable only for those at a predetermined age or more.

Note that the targets related to content output are not limited to the platforms 10 or the application servers 11. For example, the targets related to content output may include spaces, such as rooms in a virtual space, offered within applications provided by the application servers 11 and administered by those other than the administrators of the application servers 11.

An output condition set for the using user U (for each of the using users U) will next be discussed. The output condition set for each of the using users U may be such a condition that the age of the using user U falls within a range of permitted ages for receiving content elements or such a condition that a region of residence of the using user U falls within a range of permitted regions for receiving content elements. Moreover, a different example of the output condition related to content elements is such a condition that a license of content elements is granted to the using user U.

Described above has been the output condition related to content use by the using user U. Note here that the following situation may occur in some cases, i.e., the using user U meets the output condition set for the platform or the application or set for the using user U, but the output user U does not meet this output condition. For example, in a certain possible case, the age of the using user U reaches a range of permitted ages for receiving content elements, but the output user U does not reach this range of the permitted ages for receiving the content elements. Accordingly, determination on the output condition for content output to the output user U is separately made in the present embodiment.

An output condition related to content output to the output user U will hereinafter be described. The output condition related to content output to the output user U may be an output condition for targets related to content output, such as the platforms 10 and the application servers 11, in a manner similar to the manner of setting the output condition related to content use by the using user U.

Moreover, the output condition related to content output to the output user U may be an output condition set for the output user U in a manner similar to the manner of setting the output condition for the using user U as described above.

Further, content output to the output user U may be limited by determination on an output condition that is set based on an intention of the output user U. This limit is made because content used by the using user U may include content elements not preferable for the output user U. For example, the limit set based on the intention of the output user U may be a limit set under a condition related to a religion, thought and beliefs, sexual orientation, gender identity, or the like of the output user U.

The output condition may be a condition including multiple conditions selected from the output conditions described above by way of example. Moreover, the output condition is not limited to the examples presented above, and is only required to include various conditions set according to designs. Specific processing performed for limits imposed on content use by the using user U and content output to the output user U will be detailed later.

Described above has been the outline of the information processing system according to the one embodiment of the present disclosure. Subsequently described with reference to the drawings will be specific configurations of respective devices included in the information processing system according to the present embodiment.

### <<2. Functional configuration example of present embodiment>>

### <2-1. Functional configuration example of application server 11>

A configuration of the application server 11 will first be described with reference to FIG. 4. FIG. 4 is a block diagram illustrating an example of the configuration of the application server 11 according to the present embodiment. As illustrated in FIG. 4, the application server 11 includes a communication unit 110, a control unit 120, and a storage unit 130.

### (Communication unit 110)

The communication 110 communicably connects with the user profile server 12, the content server 20, and the user terminal 30 to achieve data transmission and reception. The communication unit 110 functions as a content information acquisition unit which receives from the user terminal 30 information related to a content candidate selected by the using user U who uses the user terminal 30.

Moreover, the communication unit 110 outputs, to the user terminal 30 used by the output user U, content which is generated by a generation unit 123 described later and which corresponds to content used by the using user U.

Further, the communication unit 110 transmits a user ID to the user profile server 12. The user profile server 12 returns profile information corresponding to this user ID to the application server 11.

The communication unit 110 may also transmit a content element ID to the content server 20. In this case, the content server 20 returns to the application server 11 content output information and content element information related to a content element corresponding to this content element ID. The communication unit 110 also functions as an element information acquisition unit which acquires content element information from the content server 20.

### (Control unit 120)

The control unit 120 functions as an arithmetic processing device and a control device, and controls overall operations within the application server 11 under various programs. The control unit 120 according to the present embodiment also functions as a condition acquisition unit 121, a determination unit 122, and the generation unit 123.

### (Condition acquisition unit 121)

The condition acquisition unit 121 acquires an output condition for content. The condition acquisition unit 121 may acquire an output condition by generating an output condition for each of the users U in reference to profile information. For example, an output condition may be such a condition that the age of the user U calculated from the date of birth contained in the profile information falls within a range of permitted ages for receiving content elements.

Moreover, the condition acquisition unit 121 may acquire an output condition set for each of applications or the platforms 10. The condition acquisition unit 121 may acquire an output condition based on rules of the platform 10 or an application, as a condition set in advance by the administrator of the application server 11 or the administrator of the platform 10 and stored in the storage unit 130 described later.

Further, the condition acquisition unit 121 may acquire an output condition based on an intention by each of the output users U. The output condition based on the intention of the output user U may be selected by the output user U with use of the user terminal 30 and received by the communication unit 110 from the user terminal 30, or may be contained in profile information.

The condition acquisition unit 121 may perform control to cause the communication unit 110 to transmit an output condition related to the using user U, or part of this output condition to the content server 20. The content server 20 transmits content elements meeting the received condition to the application server 11.

### (Determination unit 122)

The determination unit 122 determines whether or not each of multiple content elements constituting a content candidate meets an output condition, in reference to information related to this content candidate and received by the communication unit 110.

For example, the determination unit 122 determines whether or not each of the multiple content elements meets an output condition, in reference to an output condition based on rules of the platform 10 and an application, an output condition related to content use set for each of the using users U, an output condition related to content display set for each of the output users U, an output condition based on an intention of the output user U, or the like.

Specific examples of determination made by the determination unit 122 with regard to content use by the using user U and content output to the output user U will be discussed in detail for each.

### - Determination related to content use by using user U

First described will be determination made by the determination unit 122 with regard to content use by the using user U. The determination unit 122 makes determination related to an output condition for a content candidate designated by the using user U. The determination unit 122 determines whether or not each of content elements constituting this content candidate meets an output condition acquired by the condition acquisition unit 121 and applied to the using user U.

More specifically, the determination unit 122 determines whether or not each of multiple content elements meets the output condition, in reference to limit information contained in content element information received by the communication unit 110 from the content server 20.

However, in a case where the content server 20 transmits to the application server 11 content elements meeting an output condition transmitted from the communication unit 110 to the content server 20, the determination unit 122 need not make determination related to content use by the using user U.

For example, in a case where the using user U sequentially selects all of content elements, which constitute content to be used, from the first element, the content server 20 may transmit a list of multiple content elements meeting the output condition to the application server 11. In this case, this list is transmitted from the communication unit 110 to the user terminal 30 and displayed to the using user U. In this manner, the using user U is allowed to select the content elements constituting the content to be used from the content elements available for the using user U.

When the using user U selects the content elements from the list of the content elements available for the using user U, the control unit 120 controls the communication unit 110 such that information indicating content to be used by the user U in the application is transmitted to the user profile server 12. More specifically, the control unit 120 may control the communication unit 110 such that content elements IDs of the content elements constituting the content are transmitted to the user profile server 12.

The user profile server 12 stores the information indicating the content to be used by the using user U, as part of profile information of the using user U. More specifically, the user profile server 12 stores the content elements IDs of the respective content elements constituting the content, as part of the profile information. In this case, the user profile server 12 stores the information indicating the content to be used by the using user U, in combination with an application ID for identifying the application in which the content is used.

The description will return to the determination made by the determination unit 122 with regard to content use by the using user U. As an alternative method for designating a content candidate by the using user U, the using user U may designate a request for use of content used in a different application to designate a content candidate. For example, in a case where an avatar is used by the using user U as content in a certain application, it is assumed that the same avatar is desired to be used in a different application.

In a case where the using user U designates a request for use of content used in a different application, the determination unit 122 specifies content used by the using user U in the different application, as a content candidate, with reference to profile information of the using user U. Thereafter, the determination unit 122 controls the communication unit 110 such that content element IDs constituting this content candidate are transmitted to the content server 20. Subsequently, the determination unit 122 determines whether or not each of corresponding content elements meets an output condition with reference to limit information contained in content element information related to the content elements and received by the communication unit 110 from the content server 20.

Note that the condition acquisition unit 121 in the foregoing case may acquire only an output condition set for each application, as an output condition to be applied to the using user U. This manner of acquisition is allowed because the output condition generated from the profile information for each of the using users U is assumed to be the same output condition for the respective applications. However, the output condition generated from the profile information for each of the using users U may be different for each design of the applications. In this case, the output condition generated from the profile information for each of the using users U may be also acquired as an output condition to be applied to the using user U.

In a case of determination that the content elements do not meet the output condition applied to the using user U, the determination unit 122 determines whether or not alternative candidate content elements contained in content element information of the corresponding content elements meet the output condition. In this case, the determination unit 122 determines whether or not the alternative candidate content elements meet the output condition in reference to limit information contained in content element information of the alternative candidate content elements.

The communication unit 110 may receive the content element information of the alternative candidate content elements from the content server 20 simultaneously with reception of the content element information of the content elements not determined to meet the output condition. In addition, the determination unit 122 may control the communication unit 110 such that content elements IDs of the alternative candidate content elements are transmitted to the content server 20 at the time when the content elements are determined not to meet the output condition. In such a manner, the communication unit 110 is allowed to acquire the content element information of the alternative candidate content elements from the content server 20.

### - Determination related to content output to output user

Subsequently described will be determination made by the determination unit 122 with regard to content output to the output user U. The determination unit 122 determines whether or not a candidate of content to be used by the using user U meets an output condition applied to the output user U.

For example, the determination unit 122 may make determination on the output condition for the output user U selected by the using user U operating the user terminal 30 as a target user to share content with the using user U. In an alternative example, the determination unit 122 may make determination on the output condition applied to the output user U in a case where an avatar constituting content and acting as a double of the using user U moves into a virtual space displayed by the user terminal 30 used by the output user U.

### (Generation unit 123)

The generation unit 123 generates alternative content in a case where the determination unit 122 determines that at least one content element among multiple content elements constituting the content does not meet the output condition. The alternative content is content including an alternative content element (one example of alternative element) which is a content element different from the content element not meeting the output condition.

Moreover, the generation unit 123 functions as a selection unit which selects an alternative content element.

The alternative content element may be an alternative candidate content element for a content element that is determined by the determination unit 122 as not meeting the output condition and that is among multiple content elements constituting the content. It is preferable that the alternative content element be an alternative candidate content element determined to meet the output condition by the determination unit 122.

In a case where there are multiple alternative candidate content elements, the determination unit 122 may sequentially make determination on the output condition for the respective alternative candidate content elements, and select the alternative candidate content element meeting the output condition as an alternative content element.

In addition, in a case where there are multiple alternative candidate content elements, the determination unit 122 may calculate a feature of a content element not determined to meet the output condition and respective features of the multiple alternative candidate content elements. Thereafter, the determination unit 122 may select, as an alternative content element, the alternative candidate content element having a feature most similar to the feature of the content element from among the alternative candidate content elements meeting the output condition.

The alternative content generated by the generation unit 123 in a case where the content candidate does not meet the output condition applied to the using user U is output to the user terminal 30. In this case, the using user U may input information indicating whether or not to confirm use of this alternative content, by operating the user terminal 30. The information input to the user terminal 30 and indicating confirmation of use of the alternative content is received by the communication unit 110. In this case, the control unit 120 may control the communication unit 110 such that this information indicating the alternative content is transmitted to the user profile server 12 as information indicating content used by the using user U in the application.

Meanwhile, in a case where the communication unit 110 receives information input to the user terminal 30 and indicating that use of the alternative content is not confirmed, the process for selecting a content element by the using user U may be executed again.

There is a possibility here that the alternative candidate content element set by the determination unit 122 for the content element does not meet the output condition. In this case, the generation unit 123 may select a reference content element (one example of reference element) stored in the storage unit 130 described below as the alternative content element. The storage unit 130 described later may store multiple reference content elements. In this case, the generation unit 123 may select a reference content element of the same content type as the content type of the content element, as the alternative content element.

Moreover, the generation unit 123 may select a reference content element having a size equal or similar to the size of the content element, and designate the selected reference content element as the alternative content element. Further, the generation unit 123 may select reference content resizable to the size of the content element. Thereafter, the generation unit 123 may resize the selected reference content to the size of the content element to generate the alternative content element.

Alternative content generated by the generation unit 123 will be described here with reference to FIGS. 5 and 6. FIG. 5 is an explanatory diagram for explaining alternative content generated by the generation unit 123 in a case where the using user U designates a request for use of content in a different application. As illustrated in FIG. 5, an avatar A1 constituting content and used by the using user U in an application A provided by an application server 11A includes content elements E1 through E4.

It is assumed here that the using user U designates a request for use of the avatar A1, which is used in the application A provided by the application server 11A, in an application B provided by an application server 11B. In this case, the determination unit 122 of the application server 11B determines whether or not each of the content elements E1 through E4 constituting the avatar A1 meets an output condition applied to the using user U in the application B.

In a case where the content element E2 does not meet the output condition applied to the using user U in the application B in this situation, the generation unit 123 generates an avatar A2 as alternative content having an alternative content element AE1 in place of the content element E2 of the avatar A1.

FIG. 6 is an explanatory diagram for explaining alternative content generated according to a result of determination on an output condition applied to the output user U as an alternative of content used by the using user U. As illustrated in FIG. 6, the avatar A1 constituting content used by a using user U1 includes the content elements E1 through E4.

It is assumed here that a candidate of content to be output to each of an output user U2 and an output user U3 is the avatar A1. In this case, the determination unit 122 determines whether or not each of the content elements E1 through E4 constituting the avatar A1 meets respective output conditions applied to the output users U2 and U3.

In a case where all of the content elements E1 through E4 constituting the avatar A1 meet the output condition applied to the output user U2 in this situation, the generation unit 123 does not generate alternative content, and the avatar A1 is output to the output user U2.

Meanwhile, it is assumed that content elements E2 and E3 do not meet the output condition of the output user U3. In this case, the generation unit 123 generates an avatar A3 as alternative content which has alternative content elements AE2 and AE3 in place of the content elements E2 and E3 of the avatar A1.

While described above has been the example of the application server 11 including the control unit 120, the device having the function of the control unit 120 is not limited to the application server 11. Some or all of the functions of the control unit 120 may be equipped in a different device. For example, the platform 10 administrating the application server 11 may have the functions of the control unit 120, or may have at least one of the functions of the condition acquisition unit 121, the determination unit 122, and the generation unit 123 rather than all of the functions of the control unit 120. Moreover, not only the platform 10 but also a different administrating server connected to multiple platforms 10 may have the functions of the control unit 120, or may have at least one of the functions of the condition acquisition unit 121, the determination unit 122, and the generation unit 123 rather than all of the functions of the control unit 120.

Further, the control unit 120 included in the platform 10A or the application server 11A may be configured to control content output by a virtual space service of the platform 10B. Specifically, the platform 10A or the application server 11A may make determination on an output condition for content output by the platform 10B, and select an alternative content element.

### (Storage unit 130)

The storage unit 130 is implemented by a ROM (Read Only Memory) which stores programs, arithmetic parameters, and the like used for processing by the control unit 120 and a RAM (Random Access Memory) which temporarily stores parameters and the like variable as appropriate.

For example, the storage unit 130 may store output conditions set by the administrator of the platform 10 or the application server 11. Moreover, the storage unit 130 may store reference content elements.

### <2-2. Functional configuration example of user terminal 30>

A configuration of the user terminal 30 will next be described with reference to FIG. 7. FIG. 7 is a block diagram illustrating an example of the configuration of the user terminal 30 according to the present embodiment. As illustrated in FIG. 7, the user terminal 30 includes a communication unit 310, a storage unit 320, a control unit 330, an operation display unit 340, and a sound output unit 350.

### (Communication unit 310)

The communication unit 310 communicably connects with the application server 11 and the user profile server 12 to achieve data transmission and reception. For example, the communication unit 310 receives from the application server 11 information for display of content provided by the application server 11 on the operation display unit 340 described later. The content provided by the application server 11 may include content corresponding to content used by the using user U who uses the user terminal 30 and content used by a different using user U different from the user terminal 30.

Moreover, the communication unit 310 transmits to the application server 11 information input to the operation display unit 340 described later and related to a candidate of the content used by the user U.

Further, the communication unit 310 may transmit to the user profile server 12 information input to the operation display unit 340 described later and related to the user U. The user profile server 12 stores profile information corresponding to the received information.

### (Storage unit 320)

The storage unit 320 is implemented by a ROM which stores programs, arithmetic parameters, and the like used for processing by the control unit 330 and a RAM which temporarily stores parameters and the like variable as appropriate.

### (Control unit 330)

The control unit 330 functions as an arithmetic processing device and a control device, and controls overall operations within the user terminal 30 under various programs. For example, the control unit 330 controls the communication unit 310 such that information input to the operation display unit 340 described later is transmitted to the application server 11 or the user profile server 12.

### (Operation display unit 340)

The operation display unit 340 functions as an operation unit operated by the user U to input an instruction or information to the user terminal 30. For example, the operation display unit 210 may receive selection of content desired to be used from the using user U.

The operation display unit 340 also functions as a display unit which displays various types of information, such as content provided by the application server 11, under control by the control unit 330.

### (Sound output unit 350)

The sound output unit 350 is a sound output device such as a speaker and a headphone, and outputs sounds included in content or the like provided by the application server 11 under control by the control unit 330.

### <<3. Operational processing example of present embodiment>>

An example of operation processing performed in the present embodiment will next be described with reference to FIGS. 8 through 12. FIGS. 8 and 9 are sequence diagrams each illustrating an example of a flow of a process related to content use by the using user U and performed by the information processing system according to the present embodiment.

Described with reference to FIG. 8 will be an example of a flow of a process related to use of content by the using user U and performed in a case where a list of multiple content elements meeting an output condition is transmitted from the content server 20 to the application server 11.

First, the using user U selects a start of content selection by using the operation display unit 340 of the user terminal 30 to start selection of content to be used by the using user U (S101). The communication unit 310 transmits information indicating a start of content selection to the application server 11 (S102).

The communication unit 110 of the application server 11 transmits a user ID of the using user U to the user profile server 12 in a case where the communication unit 110 receives information indicating the start of content selection from the user terminal 30 (S103). The user profile server 12 transmits profile information of the using user U corresponding to the received user ID to the application server 11 (S104).

Next, the condition acquisition unit 121 of the application server 11 acquires an output condition related to the content and applied to the using user U (S105). The output condition may be either a condition generated in reference to the profile information or a condition stored in the storage unit 130. The communication unit 110 transmits the acquired output condition to the content server 20 (S106).

The content server 20 transmits a list of content elements meeting the acquired output condition to the application server 11 (S107). The communication unit 110 of the application server 11 transmits the received list of content elements to the user terminal 30 (S108).

The operation display unit 340 of the user terminal 30 displays a selection screen in which content elements to be used are selected from content elements available for the using user U, with reference to the received list of content elements. The using user U selects content elements to be used by operating the operation display unit 340 (S109).

The communication unit 310 transmits content element IDs indicating the selected content elements to the application server 11 (S110). The communication unit 110 of the application server 11 transmits to the user profile server 12 the user ID of the using user U and the respective content element IDs that are received from the user terminal 30 and that correspond to information indicating content used by the using user U in an application (S111).

The user profile server 12 stores, as part of the profile information of the using user U, a combination of the information indicating the content to be used by the using user U and an application ID indicating the application provided by the application server 11 (S112).

Subsequently described with reference to FIG. 9 will be an example of a flow of a process related to use of content by the using user U and performed in a case where the using user U selects use of content in a different application.

First, the operation display unit 340 of the user terminal 30 receives selection made by the using user U and related to a request for use of the content in the different application (S201). The communication unit 310 transmits information indicating a request for use to the application server 11 (S202). For example, the information indicating the request for use may include an application ID of the different application and a content type.

The communication unit 110 of the application server 11 transmits to the user profile server 12 a user ID of the using user U who uses the user terminal 30 that has transmitted the information indicating the request for use (S203). The user profile server 12 transmits profile information of the using user U corresponding to the received user ID to the application server 11 (S204). In this manner, the application server 11 acquires a combination of the content to be used by the using user U and the application ID of the different application.

Next, the condition acquisition unit 121 of the application server 11 acquires an output condition related to the content and applied to the using user U (S205). The output condition may be either a condition generated in reference to the profile information or a condition stored in the storage unit 130.

Subsequently, the communication unit 110 of the application server 11 transmits to the content server 20 content element IDs of content elements constituting content (content candidate) included in the profile information and to be used by the using user U (S206). The content server 20 transmits content element information corresponding to these content elements IDs to the application server 11 (S207).

The determination unit 122 of the application server 11 determines whether or not each of the content elements meets the output condition applied to the using user, in reference to the received content element information (S208).

In a case where all of the content elements meet the output condition (S208: YES), the communication unit 110 transmits to the user profile server 12 the user ID of the using user U and the content element IDs which indicate the content elements constituting the content candidate and correspond to information indicating the content to be used by the using user U in the application (S209).

The user profile server 12 stores, as part of the profile information of the using user U, a combination of the information indicating the content to be used by the using user U and the application ID indicating the application provided by the application server 11 (S210).

Meanwhile, in a case where any of the content elements does not meet the output condition (S208: NO), the determination unit 122 of the application server 11 makes determination for alternative candidate content elements provided for the respective content elements not meeting the output condition (S211).

The process performed in S211 in FIG. 9 will next be discussed with reference to FIG. 10. FIG. 10 is a flowchart illustrating an example of a flow of a determination process performed by the determination unit 122 for an alternative candidate content element.

First, the determination unit 122 determines whether alternative candidate content is set for a content element not meeting an output condition, in reference to content element information (S212). In a case where no alternative content candidate element is set (S212: NO), the process is advanced to S101 in FIG. 8 to perform processing for selecting a content element from content elements available for the using user, in place of use of the content element not meeting the output condition.

In a case where an alternative content candidate element is set (S212: YES), the determination unit 122 determines whether or not this alternative content candidate element meets the output condition (S213). In a case where the alternative content candidate element does not meet the output condition (S213: NO), the process is advanced to S101 in FIG. 8.

In a case where the alternative content candidate element meets the output condition (S213: YES), the generation unit 123 generates alternative content including the alternative content candidate element as an alternative content element. Thereafter, the communication unit 110 transmits information indicating the alternative content to the user profile server (S214). The user profile server 12 stores, as part of profile information of the using user U, a combination of the information indicating the alternative content and an application ID indicating an application provided by the application server 11.

Described hereinbefore has been an example of the flow of the process performed by the application server 11 and related to use of content by the using user U. A flow of a process related to content output to the output user U will next be described with reference to FIGS. 11 and 12.

FIG. 11 is a sequence diagram illustrating an example of a flow of a process related to content output to the output user U and performed by the information processing system according to the present embodiment. First, the determination unit 122 of the application server 11 acquires information related to a content candidate output to the output user U (S301).

Next, the communication unit 110 transmits a user ID of the output user U to the user profile server 12 (S302). The user profile server 12 transmits profile information of the output user U corresponding to the received user ID to the application server 11 (S303).

Subsequently, the condition acquisition unit 121 of the application server 11 acquires an output condition related to the content and to be applied to the output user U (S304). The output condition may be either a condition generated in reference to the profile information or a condition stored in the storage unit 130.

Following this, the communication unit 110 of the application server 11 transmits to the content server 20 content element IDs of content elements constituting the content (content candidate) to be used by the using user U (S305). The content server 20 transmits content element information related to these content element IDs to the application server 11 (S306).

The determination unit 122 of the application server 11 determines whether or not each of the content elements meets the output condition applied to the output user, in reference to the received content element information (S307).

In a case where all of the content elements meet the output condition (S307: YES), the communication unit 110 transmits to the user terminal 30 information for output of content including these content elements (S308).

Meanwhile, in a case where any of the content elements does not meet the output condition (S307: NO), the generation unit 123 generates alternative content (S309). The communication unit 110 transmits information for output of the generated alternative content to the user terminal 30 (S315).

The process performed in S309 in FIG. 11 will next be discussed with reference to FIG. 12. FIG. 12 is a flowchart illustrating an example of a flow of an alternative content generation process performed by the generation unit 123.

First, the determination unit 122 determines whether an alternative content candidate element is set for a content element not meeting an output condition, in reference to content element information (S311). In a case where no alternative content candidate element is set (S311: NO), the generation unit 123 generates alternative content which includes a reference content element as an alternative content element in place of the content element not meeting the output condition (S314).

In a case where an alternative content candidate element is set (S311: YES), the determination unit 122 determines whether or not this alternative content candidate element meets the output condition (S312). In a case where the alternative content candidate element does not meet the output condition (S312: NO), the generation unit 123 generates alternative content which includes a reference content element as an alternative content element in place of the content element not meeting the output condition (S314).

In a case where the alternative content candidate element meets the output condition (S312: YES), the generation unit 123 generates alternative content which includes the alternative content candidate element as an alternative content element in place of the content element not meeting the output condition, and ends the process (S313).

### <<4. Examples of operational advantages of present embodiment>>

The information processing system according to the present disclosure described above can achieve various advantageous effects. For example, the application server 11 according to the present disclosure is capable of limiting use and output of content, and also capable of providing alternative content. Accordingly, experiential values for the users U improve.

For example, even in a case where content elements of content used in a different application do not meet an output condition, the using user U can smoothly use alternative content. Accordingly, usability improves.

Moreover, even in a case where content elements of content used by the using user U do not meet the output condition, alternative content is output to the output user U. Accordingly, the output user U can view and listen to content corresponding to the content used by the using user U in a manner similar to the manner for the content used by the using user U as possible. Further, if the content used by the using user U is content unpreferable for the output user U, this content is not viewed or listened to by the output user U. Accordingly, an experiential value for the output user U improves.

In addition, the application server 11 according to the present disclosure also makes determination related to an output condition for alternative content elements of content elements set in advance. For example, in a case where a provider of content (the administrator of the content server 20) is different from the administrator of the platform 10 or the application server 11, alternative content would not necessarily meet the output condition. Accordingly, whether the alternative content elements meet the output condition is determined to provide alternative content suitable for design made by the administrator of the platform 10 or the application server 11.

Besides, the application server 11 according to the present disclosure is capable of limiting output of content according to various output conditions. More specifically, the application server 11 can set an output condition according to the platform 10, an application provided by the application server 11, and a policy, a license, a profile, or the like at each level of the users U. Accordingly, content can be limited in a flexible manner according to situations.

### <<5. Modifications of present embodiment>>

Described above has been the operation example of the information processing system according to the present embodiment. The technology according to the present disclosure is not limited to the embodiment described above. Hereinafter discussed will be modifications of the information processing system according to the present embodiment.

### <5-1. First modification>

A first modification according to the present embodiment will first be described. According to the example of the embodiment described above, the determination unit 122 of the application server 11 determines whether or not respective content elements meet an output condition, in reference to limit information related to the respective content elements. The determination unit 122 according to the first modification determines whether or not content elements which are included in a combination of two or more content elements that are among multiple content elements constituting a content candidate meet an output condition, in reference to an analysis result of this combination.

The condition acquisition unit 121 according to the first modification may acquire an output condition for a combination of two or more content elements, in reference to user profile information. For example, the condition acquisition unit 121 may acquire an output condition for a combination of multiple types of clothing (top, bottom, underclothing, etc.) constituting an avatar as content.

The output condition may be such a requirement that a degree of exposure, which is a proportion of a total area of a visible skin area of the avatar in a clothing wearing state (partial skin area) to an entire skin area of the avatar in a state without clothing (entire skin area), does not exceed a threshold. For example, the partial skin area is an area of the exposed face, arms, belly, or legs. The determination unit 122 calculates the partial skin area and the entire skin area to obtain the degree of exposure according to a calculation result. In a case where the output condition is not met for the combination of the multiple types of clothing, the determination unit 122 may determine that each of the multiple types of clothing does not meet the output condition.

Note that the determination unit 122 may calculate a partial skin area and an entire skin area of the avatar viewed from viewpoints in two directions so as to calculate the degree of exposure of the whole body of the avatar. For example, the viewpoints in two directions may be constituted by a viewpoint when the avatar is viewed from the front and a viewpoint when the avatar is viewed from the back. The determination unit 122 may calculate the degree of exposure of the avatar for each of the viewpoints in two directions, and determine whether or not each of the degrees of exposure exceeds a threshold. Moreover, the determination unit 122 may calculate the degree of exposure by summing up the partial skin areas and the entire skin areas in the two directions, and determine whether or not the calculated degree of exposure exceeds a threshold.

Described here with reference to FIG. 13 will be determination made by the determination unit 122 with regard to an output condition for the degree of exposure of the avatar. FIG. 13 is an explanatory diagram for explaining determination made by the determination unit 122 with regard to an output condition for the degree of exposure of the avatar. The determination unit 122 calculates partial skin areas s1 through s7 of an avatar having an entire skin area S1 and wearing a content element E5 as a top and a content element E6 as a bottom as illustrated in FIG. 13. For example, the partial skin area s1 indicates a skin area of the exposed head portion of the avatar.

The determination unit 122 calculates a total area of the partial skin areas s1 through s7. Thereafter, the determination unit 122 calculates a degree of exposure by calculating a proportion of the total area of the partial skin areas s1 through s7 to the entire skin area S1.

Note that the determination unit 122 may calculate the degree of exposure for each of portions of the body. In this case, the output condition may be set for each of the portions, and different thresholds may be set for the respective portions. Moreover, each of the thresholds of the portions may be set to a value either higher or lower than a reference value set for the corresponding portion according to the output condition. For example, in a case where the output condition is generated based on the age of the user U, the threshold for the degree of exposure of the face may be set to a value higher than a reference value set for the face. Meanwhile, for portions each preferably exposed within a limit (chest, lower abdomen, etc.) for sexual reasons, each of thresholds for the degree of exposure of these portions may be set to a value lower than a reference value set for the corresponding portion. Besides, in a case where the output condition is generated based on the region of residence of the user U, the threshold for the degree of exposure of the face in a region of a culture that is averse to exposing faces may be set to a value lower than a reference value set for the face.

The application server 11 according to the first modification can output content under finer output conditions. Accordingly, experiential values for the users U improve.

### <5-2. Second modification>

A second modification according to the present embodiment will next be described. According to the example of the embodiment described above, the determination unit 122 of the application server 11 determines whether or not respective content elements meet an output condition, in reference to limit information related to the respective content elements. The determination unit 122 according to the second modification determines whether or not each of content elements meets an output condition, in reference to information received by the communication unit 110 from the user terminal 30.

The condition acquisition unit 121 according to the second modification acquires an output condition which includes permission of output of content elements from the user terminal 30 of the output user U. This output condition may be stored in the storage unit 130.

The control unit 330 of the user terminal 30 determines whether or not each of the content elements indicated by content element information received from the application server 11 meets a condition stored in the storage unit 320. This condition may be a condition for which determination based on limit information included in profile information cannot be made. For example, this condition may be a condition related to information indicating private matters such as a religion, thought and beliefs, sexual orientation, and gender identity. The condition is set by the output user U with use of the operation display unit 340, and stored in the storage unit 320.

The control unit 330 may make determination on the condition in reference to information included in the content element information, or by calculating features of content elements in reference to information included in the content element information. In a case where the control unit 330 determines that the condition is met, the communication unit 310 transmits to the application server 11 information indicating permission of output of the content elements.

According to the configuration of the second modification, the user terminal 30 makes determination on a condition for information indicating private matters. Accordingly, information indicating private matters undesirable to be exposed to the outside for the user U is not stored in an external server, and content suitable for preferences of the output user U is providable.

Note that such a configuration which makes condition determination for all content elements by using the user terminal 30 may increase processing costs, and require time for content output. Accordingly, the storage unit 130 of the application server 11 may store in advance content element IDs of content elements which can become targets of condition determination by the user terminal 30. Alternatively, content element information of these content elements may include information indicating that the corresponding content elements can become targets of condition determination by the user terminal 30. It is sufficient if the determination unit 122 of the application server 11 only makes determination on the output condition which includes reception of information indicating permission of output of the content elements, for the corresponding content elements.

Described here with reference to FIG. 14 will be an example of a flow of a process performed by the information processing system according to the second modification of the present embodiment. FIG. 14 is a sequence diagram illustrating an example of the flow of the process performed by the information processing system according to the second modification of the present embodiment. First, the determination unit 122 of the application server 11 acquires information indicating a content candidate output to the output user U (S401).

Next, the communication unit 110 of the application server 11 transmits to the content server 20 content element IDs of content elements constituting the candidate content (S402). The content server 20 transmits content element information corresponding to the content element IDs to the application server 11 (S403).

Subsequently, the condition acquisition unit 121 of the application server 11 acquires an output condition related to the content and applied to the output user U (S404). It is assumed here that the condition acquisition unit 121 acquires an output condition which includes reception of information indicating permission of output of the content elements from the user terminal 30 of the output user U.

The communication unit 110 transmits the content element information to the user terminal 30 (S405). The control unit 330 of the user terminal 30 determines whether or not each of the content elements meets a condition stored in the storage unit 320, in reference to the content element information received by the communication unit 110 (S406). The communication unit 110 transmits information indicating whether or not to permit output of the content elements according to a result of the determination made by the control unit 330 (S407).

In a case of reception of information indicating permission of content output from the user terminal 30 (S408: YES), the communication unit 110 of the application server 11 transmits to the user terminal 30 information for content output of a content candidate (S409).

In a case where the communication unit 110 receives information indicating non-permission of content output from the user terminal 30 (S408: NO), the generation unit 123 generates alternative content. Thereafter, the communication unit 110 transmits information for alternative content output to the user terminal 30 (S410). Note that the control unit 330 of the user terminal 30 may further determine whether or not each of alternative content candidate elements meets the condition.

In addition, described here has been the example where the user terminal 30 transmits to the application server 11 information indicating permission or non-permission of output of content elements. However, the user terminal 30 may transmit to the application server 11 information related to output of content as a content candidate, and information related to generation of alternative content for this content candidate simultaneously with transmission of the content element information, in S405 in FIG. 14. In this case, the control unit 330 of the user terminal 30 may determine which of the content as the content candidate and the alternative content is to be displayed according to a condition determination result, and then control display on the operation display unit 340. This control can avoid an indirect leak of private information caused by transmission of information indicating permission or non-permission of output of content elements.

### <<6. Second embodiment>>

### <6-1. Functional configuration example of second embodiment>

A second embodiment according to the present disclosure will next be described. An information processing system according to the second embodiment of the present disclosure includes platforms 50 instead of the platforms 10 of the information processing system according to the first embodiment described above.

Mainly discussed here will be configurations that are included in the information processing system of the second embodiment of the present disclosure but are different from the corresponding configurations of the information processing system of the first embodiment described above. The same configurations as the corresponding configurations of the information processing system of the first embodiment will not repeatedly be described in detail.

FIG. 15 is a block diagram illustrating an example of a configuration of the platform 50 according to the second embodiment. As illustrated in FIG. 15, the platform 50 includes multiple application servers 11, the user profile server 12, and a necessary alternative content DB 53.

### (Necessary alternative content DB 53)

The necessary alternative content DB 53 is a database which stores necessary alternative content information used when the determination unit 122 of the application server 11 makes determination on an output condition for which determination based on limit information included in content element information cannot be made.

The necessary alternative content information is information indicating a shape or a phrase which can be determined as not meeting an output condition by the determination unit 122 (can be determined as a limit target) in a case of being included in content elements. For example, the shape which can be determined as a limit target may be a shape of a symbol having a religious implication for a specific religion or a shape of a symbol having a political implication for a specific political party.

Necessary alternative content information related to a shape may include data for display of the shape, a shape ID for identifying the shape, a shape type, and shape limit information indicating a limit imposed on output of the shape. For example, the shape limit information may be information indicating permitted ages for receiving the shape or permitted regions for receiving the shape. In a case where a shape is included in a content element, whether or not the content element meets the output condition is determined in reference to the shape limit information.

In addition, necessary alternative content information related to a shape includes a feature of this shape. The feature of the shape is calculated in reference to data for displaying the shape. Note that the data for displaying the shape may be two-dimensional image data of the shape or a three-dimensional object.

Meanwhile, for example, the phrase which can be determined as a limit target may be a phrase having a religions implication for a specific religion or a phrase having a political implication for a specific political party.

Necessary alternative content information related to a shape may include data for output of the phrase, a phrase ID for identifying the phrase, a phrase type, and a phrase limit information indicating a limit imposed on output of the phrase. For example, the phrase limit information may be information indicating permitted ages for receiving the phrase or permitted regions for receiving the phrase. In a case where a phrase is included in a content element, whether or not the content element meets the output condition is determined in reference to the phrase limit information.

In addition, necessary alternative content information related to a phrase includes a feature of this phrase. The feature of the phrase is calculated in reference to data for outputting the phrase. Note that the data for outputting the phrase may be character data or audio data representing the phrase.

### (Determination unit 122)

According to the first embodiment described above, the determination unit 122 of the application server 11 determines whether or not respective content elements meet an output condition, in reference to limit information related to the respective content elements. The determination unit 122 according to the second embodiment analyzes content elements in a case where limit information related to the content elements does not include information corresponding to an output condition. Further, the determination unit 122 determines whether or not the respective content elements meet the output condition, according to a result of this analysis.

More specifically, the determination unit 122 may achieve analysis by calculating a degree of similarity between features of the content elements and a feature of a shape or a phrase not meeting the output condition in a case of being included in the content elements.

The feature of the shape or the phrase not meeting the output condition in the case of being included in the content elements is a feature included in necessary alternative content information acquired by the communication unit 110 from the necessary alternative content DB 53. The determination unit 122 may control the communication unit 110 such that the output condition is transmitted to the necessary alternative content DB 53. Thereafter, the necessary alternative content DB 53 may identify the shape or the phrase not meeting the output condition in the case of being included in the content elements, and transmit a feature of the shape or the phrase to the application server 11.

The determination unit 122 calculates a feature of a content element corresponding to a target of determination on the output condition. For example, the determination unit 122 may calculate a feature of three-dimensional object data or two-dimensional image data included in the content element, in a case where the content element is a virtual object, a video, or an image.

Moreover, in a case where the content element includes a sentence, the determination unit 122 may calculate a feature of this sentence. Further, in a case where the content element includes a sound, the determination unit 122 may calculate a feature of this sound or may convert this sound into a sentence and calculate a feature of the sentence.

The determination unit 122 calculates a degree of similarity between the calculated feature of the content element and a feature included in the necessary alternative content information. It is preferable here that data as a calculation source of the feature of the content element and data as a calculation source of the feature included in the necessary alternative content information be data of an identical type. However, these pieces of data may be pieces of data of different types.

For example, the type of data as the calculation source of the feature of the content element and the type of data indicating a shape as the calculation source of the feature included in the necessary alternative content information may be a three-dimensional object and a two-dimensional image, respectively. In this case, the determination unit 122 may generate two-dimensional images of the three-dimensional object corresponding to a content element as viewed from each of multiple different viewpoints. Thereafter, the determination unit 122 may calculate a feature of the two-dimensional image for each of the different viewpoints, and calculate a degree of similarity between each of the calculated features and the feature included in the necessary alternative content information.

In a case where the calculated degree of similarity is lower than or equal to a predetermined threshold, there is a high possibility that a shape or a phrase not meeting the output condition in the case of being included in content elements is not included in a content element corresponding to a target of determination on the output condition. Accordingly, the determination unit 122 determines that the corresponding content element meets the output condition in a case where the calculated degree of similarity is lower than or equal to the predetermined threshold.

Meanwhile, in a case where the calculated degree of similarity is higher than the threshold, there is a high possibility that a shape or a phrase not meeting the output condition in the case of being included in content elements is included in a content element corresponding to a target of determination on the output condition. Accordingly, the determination unit 122 determines that the corresponding content element does not meet the output condition in the case where the calculated degree of similarity is higher than the threshold.

The alternative content information stored in the necessary alternative content DB 53 may be set by an administrator of the platform 50. Such a configuration allows imposition of a limit different from limit information included in content element information stored in the content server 20. Accordingly, even in a case where an intention of the administrator of the content server 20 for a limit is different from an intention of the administrator of the platform 50 for the same limit, output of content can be limited according to the intention of the administrator of the platform 50. Moreover, a limit which could not be assumed at the time of storage of content element information can be imposed on multiple content elements only by registering one necessary alternative content information later. Accordingly, usability improves.

According to the example described here, the necessary alternative content DB 53 and the application server 11 are constituted by different devices. However, information stored in the necessary alternative content DB 53 may be stored in the storage unit 130 of the application server 11. In addition, the platform 50 may include multiple necessary alternative content DBs 53. The multiple necessary alternative content DBs 53 may be provided for the multiple application servers 11 with one-to-one correspondence, and necessary alternative content information may be administered by the respective administrators of the application servers 11.

### <<6-2. Operation processing example of second embodiment>>

An example of an operation process performed in the second embodiment of the present disclosure will next be described with reference to FIG. 16. FIG. 16 is a sequence diagram illustrating an example of a flow of a process performed by the application server 11 in the information processing system according to the second embodiment of the present disclosure.

First, the determination unit 122 calculates a feature of a content element corresponding to a target of determination on an output condition (S511). Next, the communication unit 110 acquires from the necessary alternative content DB 53 a feature of a shape or a phrase not meeting the output condition in a case of being included in content elements (S512).

The determination unit 122 calculates a degree of similarity between a feature of the content element corresponding to the target of determination on the output condition and the feature of the shape or the phrase not meeting the output condition in the case of being included in content elements (S513).

In a case where the calculated degree of similarity is lower than or equal to a threshold (S514: YES), the determination unit 122 determines that the content element meets the output condition, and ends the process (S515). Meanwhile, in a case where the calculated degree of similarity is higher than the threshold (S514: NO), the determination unit 122 determines that the content element does not meet the output condition, and ends the process (S516).

### <<7. Hardware configuration example>>

An example of a hardware configuration of an information processing device according to the embodiments of the present disclosure will next be described with reference to FIG. 17. Processes performed by the application server 11, the user profile server 12, the content server 20, the user terminal 30, and the necessary alternative content DB 53 described above can be achieved by one or multiple information processing devices. FIG. 17 is a block diagram illustrating an example of a hardware configuration of an information processing device 90 which implements the application server 11, the user profile server 12, the content server 20, the user terminal 30, and the necessary alternative content DB 53 according to the embodiments of the present disclosure.

Note that the information processing device 90 is not necessarily required to include the whole of the hardware configuration illustrated in FIG. 17. Moreover, part of the hardware configuration illustrated in FIG. 17 may be eliminated from the application server 11, the user profile server 12, the content server 20, the user terminal 30, or the necessary alternative content DB 53.

As illustrated in FIG. 17, the information processing device 90 includes a CPU (Central Processing unit) 901, a ROM (Read Only Memory) 903, and a RAM (Random Access Memory) 905. The information processing device 90 may further include a host bus 907, a bridge 909, an external bus 911, an interface 913, an input device 915, an output device 917, a storage device 919, a drive 921, a connection port 923, and a communication device 925. The information processing device 90 may have a processing circuit called a GPU (Graphics Processing Unit), a DSP (Digital Signal Processor), an ASIC (Application Specific Integrated Circuit), or the like, in place of or together with the CPU 901.

The CPU 901 functions as an arithmetic processing device and a control device, and controls the whole or some of operations performed within the information processing device 90 under various programs recorded in the ROM 903, the RAM 905, the storage device 919, or a removable recording medium 927. The ROM 903 stores programs, operation parameters, and the like used by the CPU 901. The RAM 905 temporarily stores programs used for execution by the CPU 901, parameters variable as appropriate during this execution, and the like. The CPU 901, the ROM 903, and the RAM 905 are connected to one another via the host bus 907 including an internal bus such as a CPU bus. In addition, the host bus 907 is connected to the external bus 911 such as a PCI (Peripheral Component Interconnect/Interface) bus via the bridge 909. For example, each of the control unit 120 and the control unit 330 according to the present embodiments may be implemented by the CPU 901.

For example, the input device 915 is a device operated by a user, such as a button. The input device 915 may include a mouse, a keyboard, a touch panel, a switch, a lever, and the like. The input device 915 may further include a microphone which detects voices of the user. For example, the input device 915 may be a remote controller using infrared light or other radio waves, or may be an external connection apparatus 929 compatible with operations of the information processing device 90, such as a cellular phone. The input device 915 includes an input control circuit which generates input signals in reference to information input by the user and outputs the generated input signals to the CPU 901. The user operates the input device 915 to input various kinds of data and issue instructions of processing actions to the information processing device 90.

Moreover, the input device 915 may include an imaging device and a sensor. For example, the imaging device is a device which images an actual space by using an image pickup device such as a CCD (Charge Coupled Device) or a CMOS (Complementary Metal Oxide Semiconductor), a lens for controlling formation of an object image on the image pickup device, and other various parts, and forms captured images. The imaging device may be either a device for capturing still images or a device for capturing videos.

The sensor is any sensor selected from various types of sensors such as a distance measurement sensor, an acceleration sensor, a gyro sensor, a geomagnetic sensor, a vibration sensor, an optical sensor, and a sound sensor. The sensor acquires information related to a state of the information processing device 90, such as a posture of a housing of the information processing device 90, and information related to an environment around the information processing device 90 such as brightness and noise around the information processing device 90. Moreover, the sensor may include a GPS (Global Positioning System) sensor which receives GPS signals to measure the latitude, the longitude, and the altitude of the device.

The output device 917 includes a device capable of notifying the user of acquired information in a visual or auditory manner. For example, the output device 917 may be a display device such as an LCD (Liquid Crystal Display) and an organic EL (Electro-Luminescence) display, a sound output device such as a speaker and a headphone, or the like. Moreover, the output device 917 may include a PDP (Plasma Display Panel), a projector, a hologram, a printer device, or the like. The output device 917 outputs a result obtained from processing by the information processing device 90 in the form of videos such as text and images or in the form of sounds such as voices and acoustic sounds. Moreover, the output device 917 may include an illumination device or the like for illuminating surroundings.

The storage device 919 is a device for data storage provided as one example of a storage unit of the information processing device 90. For example, the storage device 919 includes a magnetic memory device such as an HDD (Hard Disk Drive), a semiconductor memory device, an optical memory device, a magneto-optical memory device, or the like. The storage device 919 thus configured stores programs and various kinds of data executed by the CPU 901, various kinds of data acquired from the outside, and the like.

The drive 921 is a reader-writer for the removable recording medium 927 which is a magnetic disk, an optical disk, a magneto-optical disk, a semiconductor memory, or the like, and is built in or externally attached to the information processing device 90. The drive 921 reads information recorded in the attached removable recording medium 927, and outputs this information to the RAM 905. Moreover, the drive 921 writes recording to the attached removable recording medium 927.

The connection port 923 is a port for direct connection between devices and the information processing device 90. For example, the connection port 923 may be a USB (Universal Serial Bus) port, an IEEE1394 port, an SCSI (Small Computer System Interface) port, or the like. Moreover, the connection portion 923 may be an RS-232C port, an optical audio terminal, an HDMI (registered trademark) (High-Definition Multimedia Interface) port, or the like. Various types of data can be exchanged between the information processing device 90 and the external connection apparatus 929 by connecting the external connection apparatus 929 to the connection port 923.

For example, the communication device 925 is a communication interface including a communication device for connection with a network 931, or the like. For example, the communication device 925 may be a wired or wireless LAN (Local Area Network), Bluetooth (registered trademark), Wi-Fi (registered trademark), or a communication card for WUSB (Wireless USB). Alternatively, the communication device 925 may be a router for optical communication, a router for ADSL (Asymmetric Digital Subscriber Line), any one of various communication modems, or the like. For example, the communication device 925 transmits and receives signals or the like to and from the Internet or other communication apparatuses by using a predetermined protocol such as TCP/IP. Moreover, the network 931 connected to the communication device 925 is a network connected wirelessly or by wire, and is the Internet, an in-home LAN, infrared communication, radio wave communication, satellite communication, or the like, for example.

### <<8. Appendix>>

The technical scope of the present disclosure is not limited to the examples in the preferred embodiments of the present disclosure described hereinbefore in detail with reference to the accompanying drawings. It is apparent that various types of modified examples and corrected examples within the scope of the technical ideas included in the claims can be arrived at by those having ordinary knowledge in the technical field of the present disclosure. It should be understood that these examples also obviously belong to the technical scope of the present disclosure.

Moreover, a series of processes performed by the respective devices and described in the present disclosure may be achieved under programs stored in a non-transitory storage medium readable by a computer (non-transitory computer readable storage medium). For example, the respective programs are loaded to a RAM during execution by a computer, and executed by a processor such as a CPU. For example, the storage medium is a magnetic disk, an optical disk, a magneto-optical disk, a flash memory, or the like. Moreover, the above programs may be distributed via a network, for example, instead of using the storage medium.

Furthermore, advantageous effects to be offered are not limited to those noted in the present description and presented only for explanatory or exemplary purposes. Specifically, the technology according to the present disclosure can provide other advantageous effects apparent to those skilled in the art in light of the present description in addition to or in place of the above advantageous effects.

Note that the following configuration also falls within the technical scope of the present disclosure.
(1) An information processing device including:
   a condition acquisition unit that acquires an output condition related to output of content in a virtual space;
   a determination unit that determines whether or not at least one element of multiple elements constituting the content output in the virtual space meets the output condition, in reference to information related to the output condition; and
   a selection unit that selects, in a case of determination that at least one element of the multiple elements does not meet the output condition, an alternative element to be used instead of the element not meeting the output condition, from alternative element candidates.
(2) The information processing device according to (1) above, in which the output condition includes a first condition set for each user corresponding to a destination for output of the content.
(3) The information processing device according to (2) above, in which the condition acquisition unit acquires the first conditions set for each of a user who designates the content to be output in the virtual space and a user who receives output of the content.
(4) The information processing device according to any one of (1) through (3) above, in which the output condition includes second conditions set for each of targets related to output of the content.
(5) The information processing device according to (4) above, in which the target includes at least either an application that outputs the content or a platform that provides the application.
(6) The information processing device according to any one of (1) through (5) above, further including:
   an element information acquisition unit that acquires element information that is related to each of multiple elements and that include limit information indicating limits of output of the elements and information indicating candidates of alternative elements corresponding to the elements, from an administrating device that stores the element information, in which
   the determination unit determines whether or not each of the multiple elements meets the output condition, in reference to the limit information.
(7) The information processing device according to (6) above, further including:
   a generation unit that generates alternative content including the alternative element selected by the selection unit.
(8) The information processing device according to (7) above, in which
   the determination unit determines whether each of the alternative element candidates of the element not meeting the output condition meets the output condition, and,
   in a case where the determination unit determines that any of the alternative element candidates meets the output condition, the selection unit determines the alternative element candidate determined to meet the output condition, as the alternative element.
(9) The information processing device according to (8) above, in which
   the element information acquisition unit acquires candidates of multiple alternative elements corresponding to the element not meeting the output condition, and
   the determination unit determines the alternative element that is among the multiple alternative elements and that meets the output condition, as the alternative element.
(10) The information processing device according to any one of (7) through (9) above, further including:
   a storage unit that stores a reference element, in which
   the selection unit selects the reference element as the alternative element in a case where the determination unit determines that the candidate of the alternative element does not meet the output condition.
(11) The information processing device according to any one of (6) through (10) above, in which the determination unit analyzes the elements, and determines whether or not each of the multiple elements meets the output condition, in reference to a result of the analysis.
(12) The information processing device according to (11) above, in which the determination unit analyzes the elements by calculating a degree of similarity between a feature of a shape or a phrase not meeting the output condition in a case of being included in the elements and features generated based on the elements.
(13) The information processing device according to (11) or (12) above, in which the determination unit determines whether or not the element included in a combination of two or more elements of the multiple elements meets the output condition, in reference to a result of analysis of the combination.
(14) The information processing device according to any one of (1) through (13) above, in which the output condition includes reception of information indicating permission of output of the elements by the content information acquisition unit from a user terminal used by a user.
(15) The information processing device according to any one of (1) through (14) above, in which the output condition includes a condition related to a license, a region, or an age for the elements.
(16) The information processing device according to any one of (1) through (15) above, in which the output condition includes a condition generated according to selection by a user corresponding to a destination for output of the content.
(17) The information processing device according to any one of (1) through (16) above, in which the content includes at least any one of a virtual object, music, a video, and an image.
(18) An information processing method executed by a computer, the method including:
   acquiring an output condition related to output of content in a virtual space;
   determining whether or not at least one element of multiple elements constituting the content output in the virtual space meets the output condition, in reference to information related to the output condition; and
   selecting, in a case of determination that at least one element of the multiple elements does not meet the output condition, an alternative element to be used in place of the element not meeting the output condition from alternative element candidates.
(19) A program causing a computer to function as:
   a condition acquisition unit that acquires an output condition related to output of content in a virtual space;
   a determination unit that determines whether or not at least one element of multiple elements constituting the content output in the virtual space meets the output condition, in reference to information related to the output condition; and
   a selection unit that selects, in a case of determination that at least one element of the multiple elements does not meet the output condition, an alternative element to be used instead of the element not meeting the output condition from alternative element candidates.

### [Reference Signs List]

- 10, 50:: Platform
- 11:: Application server
- 12:: User profile server
- 20:: Content server
- 30:: User terminal
- 53:: Necessary alternative content DB
- 110:: Communication unit
- 120:: Control unit
- 121:: Condition acquisition unit
- 122:: Determination unit
- 123:: Generation unit
- 130:: Storage unit
- 310:: Communication unit
- 320:: Storage unit
- 330:: Control unit
- 340:: Operation display unit
- 350:: Sound output unit

## Claims

1. An information processing device comprising:
a condition acquisition unit that acquires an output condition related to output of content in a virtual space;
a determination unit that determines whether or not at least one element of multiple elements constituting the content output in the virtual space meets the output condition, in reference to information related to the output condition; and
a selection unit that selects, in a case of determination that at least one element of the multiple elements does not meet the output condition, an alternative element to be used instead of the element not meeting the output condition, from alternative element candidates.

2. The information processing device according to claim 1, wherein the output condition includes a condition set for a user corresponding to a destination for output of the content.

3. The information processing device according to claim 2, wherein the condition acquisition unit acquires the conditions set for each of a user who designates the content to be output in the virtual space and a user who receives output of the content.

4. The information processing device according to claim 1, wherein the output condition includes conditions set for each of targets related to output of the content.

5. The information processing device according to claim 4, wherein the target includes at least either an application that outputs the content or a platform that provides the application.

6. The information processing device according to claim 1, further comprising:
an element information acquisition unit that acquires element information that is related to each of multiple elements and that include limit information indicating limits of output of the elements and information indicating candidates of alternative elements corresponding to the elements, from an administrating device that stores the element information, wherein
the determination unit determines whether or not each of the multiple elements meets the output condition, in reference to the limit information.

7. The information processing device according to claim 6, further comprising:
a generation unit that generates alternative content including the alternative element selected by the selection unit.

8. The information processing device according to claim 7, wherein
the determination unit determines whether each of the alternative element candidates of the element not meeting the output condition meets the output condition, and,
in a case where the determination unit determines that any of the alternative element candidates meets the output condition, the selection unit selects the alternative element candidate determined to meet the output condition as the alternative element.

9. The information processing device according to claim 8, wherein
the element information acquisition unit acquires candidates of multiple alternative elements corresponding to the element not meeting the output condition, and
the determination unit determines the alternative element that is among the multiple alternative elements and that meets the output condition, as the alternative element.

10. The information processing device according to claim 7, further comprising:
a storage unit that stores a reference element, wherein
the selection unit selects the reference element as the alternative element in a case where the determination unit determines that the candidate of the alternative element does not meet the output condition.

11. The information processing device according to claim 6, wherein the determination unit analyzes the elements, and determines whether or not each of the multiple elements meets the output condition, in reference to a result of the analysis.

12. The information processing device according to claim 11, wherein the determination unit analyzes the elements by calculating a degree of similarity between a feature of a shape or a phrase not meeting the output condition in a case of being included in the elements and features generated based on the elements.

13. The information processing device according to claim 11, wherein the determination unit determines whether or not the element included in a combination of two or more elements of the multiple elements meets the output condition, in reference to a result of analysis of the combination.

14. The information processing device according to claim 1, wherein the output condition includes permission of output of the elements by a user corresponding to a destination for output of the content.

15. The information processing device according to claim 1, wherein the output condition includes a condition related to a license, a region, or an age for the elements.

16. The information processing device according to claim 1, wherein the output condition includes a condition generated according to selection by a user corresponding to a destination for output of the content.

17. The information processing device according to claim 1, wherein the content includes at least any one of a virtual object, music, a video, and an image.

18. An information processing method executed by a computer, the method comprising:
acquiring an output condition related to output of content in a virtual space;
determining whether or not at least one element of multiple elements constituting the content output in the virtual space meets the output condition, in reference to information related to the output condition; and
selecting, in a case of determination that at least one element of the multiple elements does not meet the output condition, an alternative element to be used in place of the element not meeting the output condition from alternative element candidates.

19. A program causing a computer to function as:
a condition acquisition unit that acquires an output condition related to output of content in a virtual space;
a determination unit that determines whether or not at least one element of multiple elements constituting the content output in the virtual space meets the output condition, in reference to information related to the output condition; and
a selection unit that selects, in a case of determination that at least one element of the multiple elements does not meet the output condition, an alternative element to be used instead of the element not meeting the output condition from alternative element candidates.
